Europäisches Patentamt

European Patent Office

Office européen des brevets

(11) Veröffentlichungsnummer: **0 000 367**
**A1**

(12) **EUROPÄISCHE PATENTANMELDUNG**

(21) Anmeldenummer: **78100293.6**

(22) Anmeldetag: **03.07.78**

(51) Int. Cl.²: **F16B45/04**
**// F16G15/04**

(30) Priorität: **14.07.77 DE 7722117**

(43) Veröffentlichungstag der Anmeldung: **24.01.79**
**Patentblatt 79/2**

(84) Benannte Vertragsstaaten: **BE CH FR GB LU NL SE**

(71) Anmelder: **Herm. Sprenger, Alexanderstrasse 10-19,**
**D-5860 Iserlohn (DE)**

(72) Erfinder: **Schäfer, Karl-Heinz, Am Sonnenbrink 2a**
**D-5860 Iserlohn (DE)**

(74) Vertreter: **Schröter, Martin, Dipl.-Ing., Im**
**Tückwinkel 22, D-5860 Iserlohn (DE)**

(54) **Karabinerhaken.**

(57) Bei einem verchromten oder vernickelten Karabiner-haken ist das Hakenmaul 11 durch einen am Schaft des Hakenkörpers 1 geführten federbelasteten Schieber 3 ver-schliessbar. Im Hakenkörper 1 ist an seinem hinteren Ende drehbar eine Ringöse 2 gehalten.

Zur Vereinfachung der Herstellung von Karabinerhaken ist sein Körper parallel zur Hakenebene in die spiegelsym-metrischen Körperhälften 1a, 1b aufgeteilt, die sich in gün-stiger Weise herstellen und nach Einlegen der Verschluss-teile 3, 4 durch Schweiss- oder Nietverbindungen mitein-ander verbinden lassen. Zwischen den miteinander ver-bundenen Körperhälften 1a, 1b sind sowohl der Verschluss-schieber 3 als auch ein Verbindungsbolzen 21, 22 der Ring-öse 2 gehalten.

- 1 -

## Karabinerhaken

Die Erfindung betrifft einen Karabinerhaken mit einem durch einen am Schaft des Hakenkörpers geführten, federbelasteten Schieber verschließbaren Hakenmaul und einer mit dem Hakenschaft drehbar verbundenen Ringöse.

Derartige Karabinerhaken, deren Hakenmaul mit einem federbelasteten Verschlußbolzen verschlossen ist, werden häufig in Verbindung mit galvanisierten Ketten oder dergleichen verwendet, deren letztes Kettenglied mit der Ringöse verbunden wird. Kette und Hakenkörper bestehen dabei in der Regel aus unterschiedlichen Metallegierungen, so daß sie nicht miteinander galvanisierbar sind. Der Hakenkörper ist in der Regel ein Gußteil, beispielsweise aus einem Zink-Druckguß. Die Kettenglieder bestehen aus geschmiedetem Material.

- 2 -

Nach der Galvanisierung der Einzelteile erfolgt die Montage.

der/
Bekannt ist ein Karabinerhaken, bei der federbelastete Verschlußbolzen in einer seitlich geführten Längsbohrung im Hakenschaft geführt ist. Die Bohrung ist dabei nach außen durch eine eingesprengte Platte verschlossen, an der sich die Druckfeder abstützt. Die Ringöse ist von außen auf dem zylindrischen Hakenschaft drehbar aufgesetzt und mit einem Kragen an der Öse gehalten, der in eine Ringnut am Hakenschaft eingreift.

In dem eigentlichen Hakenkörper sind für die Aufnahme und die Führung des Verschlußbolzens eine Bohrung und ein seitlicher Schlitz anzubringen, außerdem ist am Ende des Schaftes die Ringnut auszubilden. Die Anfertigung des Hakenkörpers ist daher aufwendig. In entsprechende im Gußverfahren oder als Stanzteil hergestellte Hakenkörper sind daher mit nachgeschalteten Bearbeitungsvorgängen die entsprechenden Aufnahmen und Führungen vorzusehen.

Die Aufgabe der Erfindung besteht darin, einen Karabinerhaken der eingangs genannten Art in seiner Herstellung zu vereinfachen, wobei eine Bearbeitung bzw.

Beeinträchtigung der bereits galvanisierten Einzelteile bei der Montage vermieden werden soll.

Zur Lösung der Erfindungsaufgabe ist ein solcher Karabinerhaken gekennzeichnet durch einen parallel zur Hakenebene geteilten Hakenkörper, zwischen dessen spiegelsymmetrischen, miteinander verbundenen Körperhälften sowohl der Verschlußschieber als auch der Verbindungsbolzen der Ringöse gehalten sind.

Nach einer bevorzugten Ausführungsart der Erfindung greift der in einer Bohrung im Hakenschaft entgegen dem Druck einer Feder geführte zylindrische Verschlußschieber im Verschlußzustand in eine stirnseitige Bohrung am Hakenende ein. Die Ringöse kann dabei mit dem Kopf eines an der Öse befestigten Bolzens drehbar in einer zwischen den Körperhälften gebildeten nutartigen Hinterschneidung drehbar gehalten sein.

Aufgrund der spiegelsymmetrischen Zweiteilung des Hakenkörpers lassen sich die Körperhälften in günstiger Weise als Press - oder Gußteile herstellen, wobei die notwendigen Ausnehmungen im Inneren des Hakenkörpers bereits mit eingeformt werden können. Nach der Galva-

- 4 -

nisierung der Einzelteile werden die zwischen den
beiden Körperhälften einzusetzenden Teile, nämlich
der federbeastete Verschlußschieber und der Verbindungsbolzen der Ringöse, eingelegt. Die Verbindung
der beiden Körperhälften kann beispielsweise durch
Vernietung oder Verschweißung erfolgen. Die Montage
des Karabinerhakens ist dadurch äußerst einfach.

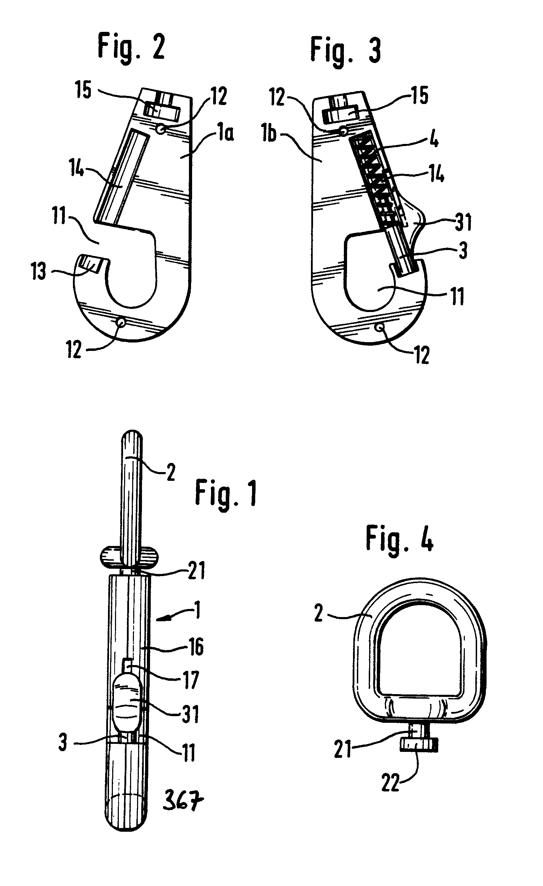

Anhand eines abgebildeten Ausführungsbeispieles wird
die Erfindung im folgenden näher erläutert: Es zeigt
Figur 1 die Vorderansicht eines Hakens,
Figur 2 die Ansicht der Innenseite der
einen Körperhälfte, Figur 3 die Innenansicht der anderen Hakenkörperhälfte
und Figur 4 die Ansicht der Ringöse mit
dem Verbindungsbolzen.

Der insgesamt mit der Ziffer 1 bezeichnete Hakenkörper
ist parallel zur Hakenebene in die spiegelsymmetrischen
Körperhälften 1a und 1b aufgeteilt. Wie aus den Figuren
2 und 3 erkennbar, sind an den Innenseiten dieser Körperhälften bereits die Bohrung 14 zur Aufnahme des Verschlußschiebers 3 und der Druckfeder 4, die nutartige
Hinterschneidung 15 zur Aufnahme des Kopfes 22 des Ver-

- 5 -

bindungsbolzens 21 an der Ringöse 2 und die Sackbohrung
13 im stirnseitigen Ende des Hakens eingeformt. Die
Ringöse kann dabei beliebige Form besitzen.

Nach dem Einlegen der genannten Teile können die beiden
Körperhälften 1a und 1b miteinander verbunden werden.
Dazu dienen die Bohrungen 12, durch die Niete hindurchgeführt werden können.

In der Hinterschneidung 15 ruht drehbar der Bolzenkopf
22 der Ringöse 2. Der zylindrische Verschlußschieber 3
ist entgegen dem Druck der Feder 4 in der Führungsbohrung 14 mit dem nach außen ragenden Griffelement 31
in der zwischen den beiden Körperhälften gebildeten
Ausnehmungen 17 begrenzt verschiebbar.

In der Verschlußstellung greift das das Hakenmaul 11
verschließende Ende des Schiebers 3 in die Sackbohrung
13 ein, die stirnseitig am Hakenende gebildet ist.

Patentansprüche:

1. Karabinerhaken mit einem durch einen am Schaft des Hakenkörpers geführten, federbelasteten Schieber verschließbaren Hakenmaul und einer mit dem Hakenschaft drehbar verbundenen Ringöse, gekennzeichnet durch einen parallel zur Hakenebene geteilten Hakenkörper (1), zwischen dessen spiegelsymmetrischen, miteinander verbundenen Körperhälften (1a, 1b) sowohl der Verschlußschieber (3) als auch der Verbindungsbolzen (21,22) der Ringöse (2) gehalten sind.

2. Karabinerhaken nach Anspruch 1, dadurch gekennzeichnet, daß der in einer Bohrung (14) im Hakenschaft (16) entgegen dem Druck einer Feder (4) geführte zylindrische Verschlußschieber (3) im Verschlußzustand in eine stirnseitige Bohrung (13) am Hakenende eingreift.

3. Karabinerhaken nach Anspruch 1, dadurch gekennzeichnet, daß die Ringöse (2) mit dem Kopf (22) eines an der Öse befestigten Bolzens (21) drehbar in einer zwischen den Körperhälften (1a, 1b) gebildeten nutartigen Hinterschneidung (15) drehbar gehalten ist.

Fig. 2

15  12
14  1a
11
13  12

Fig. 3

12  15
1b  4
14
31
3
11
12

2

Fig. 1

21
1
16
17
31
3  11
367

Fig. 4

2
21
22

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH - A - 218 295 (UNION)<br>* Seite 1, Zeile 47 - Seite 2, Zeile 67; Figuren 1-3 *<br>--- | 1 |
| | US - A - 3 186 055 (MODREY)<br>* Spalte 2, Zeilen 20-71; Figuren 1-4 *<br>--- | 1 |
| | US - A - 1 598 684 (JENSEN)<br>* Seite 1, Zeilen 20-49; Figur 1 *<br>--- | 2 |
| | GB - A - 1 240 092 (DYNAMIC TOOLS LTD.)<br>* Seite 1, Zeile 75 - Seite 2, Zeile 36; Figuren 1-4 *<br>--- | 3 |
| A | CH - A - 162 541 (CHRISTEN) | |
| A | US - A - 2 568 939 (WILSON) | |
| A | GB - A - 1 182 603 (PARSON CHAIN CO) | |
| A | DE - C - 17 387 (BEZER)<br>---- | |

**KLASSIFIKATION DER ANMELDUNG (Int.Cl.²)**

F 16 B 45/04
// F 16 G 15/04

**RECHERCHIERTE SACHGEBIETE (Int. Cl.²)**

F 16 B 45/04
F 16 B 45/00
F 16 B 45/02
B 66 C 1/36
A 63 B 29/02
B 63 H 9/08
B 63 H 9/10
F 16 G 15/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-10-1978 | JAWORSKI |

EPA form 1503.1 06.78